# EUROPEAN PATENT APPLICATION

(11) **EP 1 589 431 A1**
(43) Date of publication of application: **26.10.2005**
(21) Application number: 03772719.5
(22) Date of filing: 12.11.2003
(51) Int. Cl.: G06F 12/00, G06F 15/16

(54) **DISTRIBUTED DATABASE SYSTEM**

(30) Priority: 21.01.2003 JP 2003012545
(71) Applicant: Quest Co., Ltd., Tokyo 105-0023 (JP); Nishiyama, Shuhei, Urayasu city, Chiba 279-0014 (JP)
(72) Inventor: NISHIYAMA, Shuhei, Urayasu city, Chiba 279-0014 (JP)
(74) Representative: Betten & Resch
(86) International application number: PCT/JP2003/014390
(87) International publication number: WO 2004/066152

(57) **Abstract**

Disclosed is a distributed database system, which effectively utilizes surplus resources of a plurality of computers. For this, a topology administration server device correlates an identifier identifying a database object administered by a database administration device with an identifier identifying the database administration apparatus. When a plurality of computers transmit a cache request including an identifier identifying a database object to the topology administration server device so as to cache the database object, the topology administration server device transfers the cache request to the database administration device so that the database object is transmitted to a computer and cached there. It is also possible to operate a program executing calculation in a computer while referencing the database object cached.

## Description

### BACKGROUND OF THE INVENTION

### FIELD OF THE INVENTION

The present invention relates to a distributed database system and a grid computing system utilizing the distributed database system.

### DESCRIPTION OF THE PRIOR ART

In a typical prior art commercialized relational database system, the data distribution is implemented by two-phase commit and by replication; a hard-disk is utilized as storage medium of the database, so that the database stops when backup is performed.

In the two-phase commit, when a change of the value of a cell or a deletion of the column of the cell in a referred table is performed among cells of the table which are regulated and have reference/referenced relationships, (assuming that the reference tables are distributed into a plurality of host computers) it is necessary to avoid causing a reference cell to refer to a non-existent referenced cell. Therefore, once a check is executed on the referenced table on the host computer, when there is no reference cell, the update is temporary committed. Nevertheless when there is no reference cell, the update is finally committed, so that it is called two-phase commit.

However, the two-phase commit causes a decline in performance, and a solution thereof has been suggested by Japanese Patent Publication No. 2001-306380, page 2-3. Moreover, replication is a technology for resolving the deficiency that the two-phase commit takes too long time to be put into practical use. Mainly, a master table is copied on a server to which the new transaction data is inputted, and treated as a read-only table. In the conventional network environment, the transmission rate, i.e., on ISDN or on WAN mounted by frame relay method, is not so high that it is impractical to update copies in real-time at every update of data on the original table. Therefore, since the update is executed by periodically referring to the update information from a server, which caches, it takes several minutes to synchronize the original table with the copy, thereby limiting the usage thereof.

Meanwhile, although the RAM normally used for main memory loses contents thereof when power is interrupted, it is able to input/output of data at a comparatively high speed, so that it is used for loading a program or for a temporary memory domain. In the conventional commercialized database administration system, since RAM was expensive in the past and a non-volatile memory was low-speed and expensive, a magnetic disc device, which does not lose memory in a power failure, has been mainly used as a memory medium for storing data. This affects the successor system, so that devices using a magnetic disc are still used as a memory device of a database.

In the conventional backup of a database, it is assumed that low-speed memory medium is used as a backup medium, and if backup is executed without stopping the database, it becomes impossible to maintain consistency between the updated contents and the contents before the backup. Therefore, a method of writing a snapshot of the moment on a backup medium has been used.

Moreover, in the conventional grid computing as represented by SETI@home, only the process-sharing type, which does not place a burden on network of participants, exists (refer to "Imakoso shiritai grid-computing no subete" Nikkei IT professional, Nikkei BP, Aug, 2002 P.40-42). This is to connect many personal computers all over the world via the internet under emergency connection by using ISDN at maximum 128 Kbps before the broadband internet such as xDSL, FTTH, or CATV is widely used. In the process-sharing type grid-computing, a participants receives applications and data from a central computer, computing the received job in the background, and returns a result thereof to the central computer processing own job by the own computer. Therefore, not processing, in which new jobs come up frequently and result thereof are to be returned, thereby putting burden on the network of the participant; but processing, in which data and applications are inputted once from the network, are computed by the hour, and results thereof are outputted to the network, thereby putting no burden on the network of the participant is shared.

However, two-phase commit and replication require complex procedure to incorporate one computer into the distributed database system. This makes it difficult to distribute data.

Moreover, in recent years, for example, typically within a company, the inter-office LAN is established, high-performance personal computers are allocated on the workers' desks, and many high-performance personal computers are connected to the inter-office LAN. However, in these computers, word processor and spreadsheet processing program, or processing tool of presentation etc. are operated only in the daytime, therefore, CPU, memory, and disk have surplus capacity, and are not utilized effectively.

Moreover, this is not limited to a corporate environment, for example, in case of multiple occupancy dwellings with constantly-connected internet, CPU, memory, and disk thereof are not utilized effectively.

Furthermore, in cases where data is distributed, it becomes difficult to stop a database. This makes it impossible to use the conventional backup method of the database.

It is an objective of the present invention to provide a distributed database system enabling easy data distribution and effective utilization of capacities of CPU, memory, and disk of a personal computer connected to network.

### SUMMARY OF THE INVENTION

In order to resolve the aforementioned deficiencies, the present invention provides a distributed database system, which comprises:
a database administration apparatus, which administers the database,
a topology administration server for administering the database of the database administration apparatus, and
a plurality of computers, which are allocated in an administration domain administered on network by the topology administration server.

In this distributed database system, the topology administration server stores topology information, including certain information correlating a database object identifier, which is information for identifying a database object administered by the database administration apparatus, with an identifier of a database administration apparatus for identifying a database administration apparatus administering the database object. Moreover, the topology administration server receives a cache instruction for caching a database object from the computer, acquires an identifier of a database administration apparatus based on the database object identifier included in the cache instruction, and transfers the cache request to the database administration apparatus identified by the identifier of the database administration apparatus.

This enables easy caching of a database object to a computer, thereby resolving the deficiency.

Moreover, a computer may receive a program for performing computation while referring to a database object cached in the caching unit for a database object.

This enables computation distributing data to computers, thereby resolving the deficiency.

Moreover, a computer may detect the computational load thereof; and a transmitter for a cache request, which transmits a cache request based on the computational load detected by the detection unit for computational load.

This enables caching of a database object, for example, in case of low computational load, thereby resolving the deficiency.

Moreover, a cache request may include information relating to capacities and data types of database objects cacheable by the caching unit for a database object.

This enables cache in accordance with CPU characterizing, memory capacity, or disk capacity of a computer, thereby resolving the deficiency.

Moreover, a cache request may include information relating to time slots during which the caching unit for a database object can cache a database object.

This enables, for example, caching in the nighttime and efficient use of excess computational capacity of a computer, thereby resolving the deficiency.

Moreover, a cache request may include information relating to computational capacity of a computer.

This enables distribution of data in accordance with a computational capacity, thereby resolving the deficiency.

Moreover, a cache request may include information relating to consideration for caching a database object by a computer.

This enables, for example, motivating an owner of a computer to participate in the distributed database system of the present invention.

Moreover, topology information may correlate an identifier for a computer, in which a database object is cached, with a database object identifier. The topology administration server may update the topology information in accordance with a detection of caching the database object to the computer.

This enables easy addition of a computer, which caches a database object.

Moreover, a topology administration server may store secure information on a database object.

This enables updating of data without inconsistency even if the data is distributed.

Moreover, a topology administration server may exchange topology information with other topology administration server.

This enables wide-range distribution of data.

Moreover, in cases where a database administration apparatus updates a database object, the update of the database object may be transmitted to a computer, which caches the database object; or in cases where the computer updates the cached database object. The updating of the database object may be transmitted to the database administration apparatus.

This enables updating of data. In particular, it becomes possible to perform computation in accordance with updating of data, in cases where the computation is performed referring the database object by the computer.

Moreover, a database administration apparatus may transmit update-operation as a journal, and a journal administration server may receive and may replay the journal.

This enables backup without stoppage of a database, thereby resolving a deficiency.

### BRIEF DESCRIPTION OF THE DRAWINGS

Fig. 1 is a schematic diagram of the present invention.
Fig. 2 is a sequential diagram illustrating processing, in which the cache request is transmitted from the computer, and transferred to the topology administration server, and the database object is transferred from the database administration apparatus.
Fig. 3 is a sequential diagram of processing in which the computer performs lock on the database cached by the computer.
Fig. 4 is a functional block diagram of the computer of the distributed database system of the first embodiment of the present invention.
Fig. 5 is a functional block diagram of the topology administration server 401 of the first embodiment of the present invention.
Fig. 6 is a diagram of the cache request.
Fig. 7 is a sequential diagram of processing among the computer, the topology administration server, and the database administration apparatus.
Fig. 8 is a flow chart of processing of the topology administration server of the first embodiment of the present invention.
Fig. 9 is a functional block diagram of the distributed database system of the first embodiment of the present invention.
Fig. 10 is a table utilized for managing transmission of cache request for database object by the computer.
Fig. 11 is a functional block diagram of the computer of the first embodiment of the present invention.
Fig. 12 is a flow chart illustrating processing of the computer of the first embodiment of the present invention.
Fig. 13 is a functional block diagram of the database administration apparatus of the first embodiment of the present invention.
Fig. 14 is a flow chart illustrating processing of the database administration apparatus of the first embodiment of the present invention.
Fig. 15 is a functional block diagram of the computer of the distributed database system of the second embodiment of the present invention.
Fig. 16 is a functional block diagram of the computer of the distributed database system of the third embodiment of the present invention.
Fig. 17 is a diagram of the cache request in the fifth embodiment of the present invention.
Fig. 18 is a diagram of the cache request in the sixth embodiment of the present invention.
Fig. 19 is a diagram of the cache request in the seventh embodiment of the present invention.
Fig. 20 is a diagram of the cache request in the eighth embodiment of the present invention.
Fig. 21 is a diagram of the topology information in the ninth embodiment of the present invention.
Fig. 22 is a table illustrating the topology information of the diagram in Fig. 21.
Fig. 23 is a table illustrating correspondence between the identifier of the database object and the lock information.
Fig. 24 is a functional block diagram of the topology administration server of the ninth embodiment of the present invention.
Fig. 25 is a sequential block diagram of the data flow in cases where the computer comprises the transmitter for cache-completed information.
Fig. 26 is a functional block diagram of the topology administration server of the tenth embodiment of the present invention
Fig. 27 is a schematic diagram of the eleventh embodiment of the present invention.
Fig. 28 is a functional block diagram of the topology administration server of the eleventh embodiment of the present invention
Fig. 29 is a sequential diagram illustrating the data flow of the twelfth embodiment of the present invention.
Fig. 30 is a functional block diagram of the database administration apparatus of the twelfth embodiment of the present invention.
Fig. 31 is a functional block diagram of the computer of the twelfth embodiment of the present invention
Fig. 32 is a sequential diagram illustrating data flow of the distributed database system of the thirteenth embodiment of the present invention.
Fig. 33 is a functional block diagram of the database administration apparatus of the thirteenth embodiment of the present invention.
Fig. 34 is a functional block diagram of the computer of the thirteenth embodiment of the present invention.
Fig. 35 is a functional block diagram of the distributed database system of the fourteenth embodiment of the present invention.
Fig. 36 is a functional block diagram of the journal administration server of the fourteenth embodiment of the present invention.
Fig. 37 is a functional block diagram of the database administration apparatus of the fourteenth embodiment of the present invention.

### DESCRIPTION OF THE PREFERRED EMBODIMENT

Hereinafter, the embodiments of the present invention will be described by referring to the drawings. The present invention will not be limited to these embodiments and may be embodied in various forms without departing from the essential characteristics thereof.

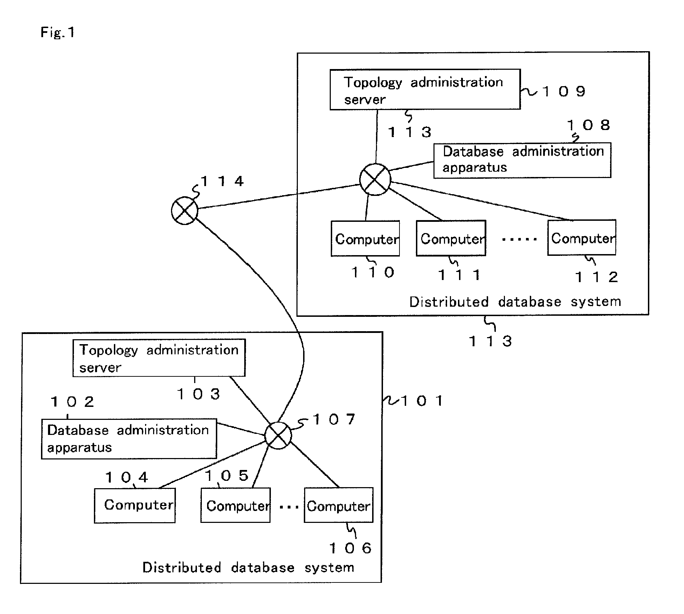

Fig. 1 is a schematic diagram of the present invention. The distributed database systems (101, 113A) relate to a distributed database system of the present invention. For example, the distributed database system 101 comprises a database administration apparatus 102, a topology administration server 103, and a plurality of computers (104, 105, ..., and 106); and the router 107 being adapted to establish communication among them.

The cache request for caching the database object administered by the database administration apparatus 102 is transmitted from the computer (104, 105, ..., and 106) to the topology administration server 103.

The topology administration server 103 transfer the cache request to the database administration apparatus 102, and, in accordance with this, the database administration apparatus transmits the database object to the computer, which has transmitted the cache request, and the computer becomes able to cache the database object.

Moreover, as shown in Fig. 1, there may be a plurality of the distributed database systems. In this case, a plurality of the distributed database systems is connected via the communication network 114. In such case, the topology administration server 103 of the distributed database system 101 and the topology administration server 109 of the distributed database system 113 communicate with each other, and exchange information relating to the database object stored in the database administration apparatus of the distributed database system therein. For example, the topology administration server 103 transmits information relating to the database object stored by the database administration apparatus 102 to the topology administration server 109. For example, the computer 110 of the distributed database system 113 transmits the cache request of the database object administered by the database administration apparatus 102 to the topology administration server 109, so that, the topology administration server 109 detects the existence of the required database object in the database administration apparatus 102 of the distributed database system 101, and transfer the cache request to the topology administration server 109.

Note that, for the topology administration server, the distributed database system, to which the computer transmitting the cache request to the topology administration server belongs, may be called an "administration domain" or "topology domain".

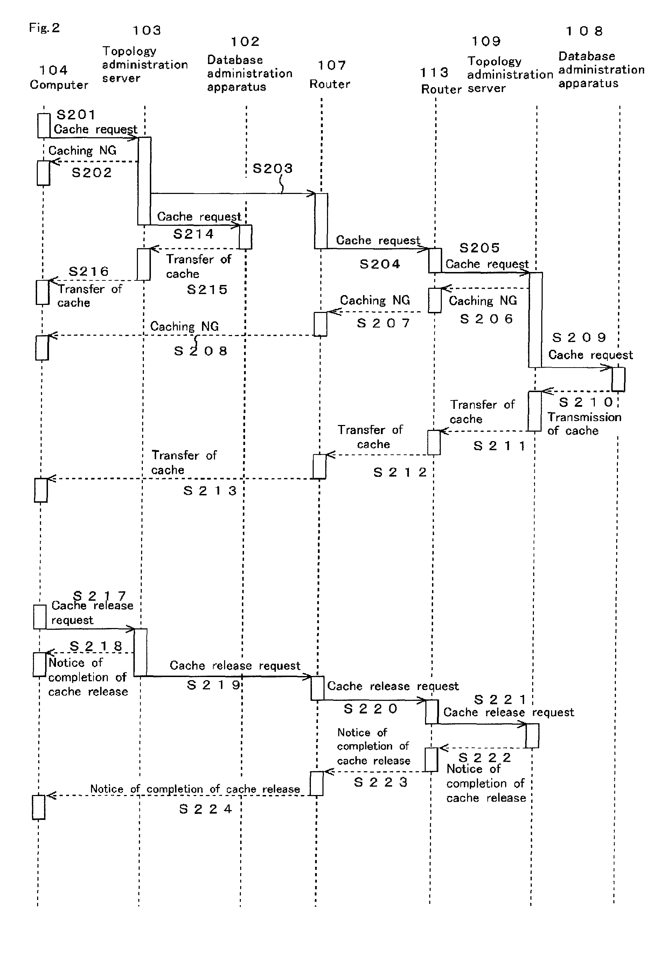

Fig. 2 is a sequential diagram of processing that the cache request is transmitted from the computer 104 and transferred to the topology administration server, and the database object is transferred from the database administration apparatus.

In step S201, the computer 104 transmits the cache request to the topology administration server 103. In cases where the cache of the database object is not allowed for some reason, a response indicating that caching is impossible is returned (step S202).

In cases where caching is possible and the cache request thereof is stored in the database administration apparatus of other administration domain; the cache request is transmitted to the router 107 (step S203), and is transferred to the router and the topology administration server 109 (steps S204, and S205). In cases where caching of the database object is not allowed for some reason, a response indicating that caching is impossible is returned to the computer 104 (steps S206, S207, and S208).

In cases where caching is possible, the cache request is transferred to the database administration apparatus 108 (step S209), and a cache is transmitted from the database administration apparatus 108 (step S210), and is transferred to the computer 104 (step S211, S212, and S213).

Moreover, the cache request corresponds to the database object stored in the database administration apparatus 102 of the same administration domain; the topology administration server 103 transfers the cache request to the database administration apparatus 102 (step S214). The database administration apparatus 102 transmits the cache (step S215), and the topology administration server 103 transfers the cache to the computer 104 (step S216).

In cases where the computer 104 releases the cache of the data object, the cache release request is transmitted to the topology administration server 103 (step S217). In cases where the cache release request corresponds to the database object stored in the database administration apparatus of the same administration domain, the topology administration server 103 returns a notice of completion of cache release (step S216).

In the case where the cache release request corresponds to the database object stored in the database administration apparatus of the different administration domain, the topology administration server 103 transmits the cache release request to the topology administration server 108 of the different administration domain (steps S219, S220, and S221), and the topology administration server 108 returns a notice of completion of cache release (steps S222, S223, and S224).

Note that, although in steps S215 and S210, the transmission of the cache is executed from the database administration apparatus to the topology administration server of the different administration domain, the transmission of the cache may be executed directly to the computer, which has transmitted the cache request.

Moreover, the topology administration server may administer a lock operation to the database object.

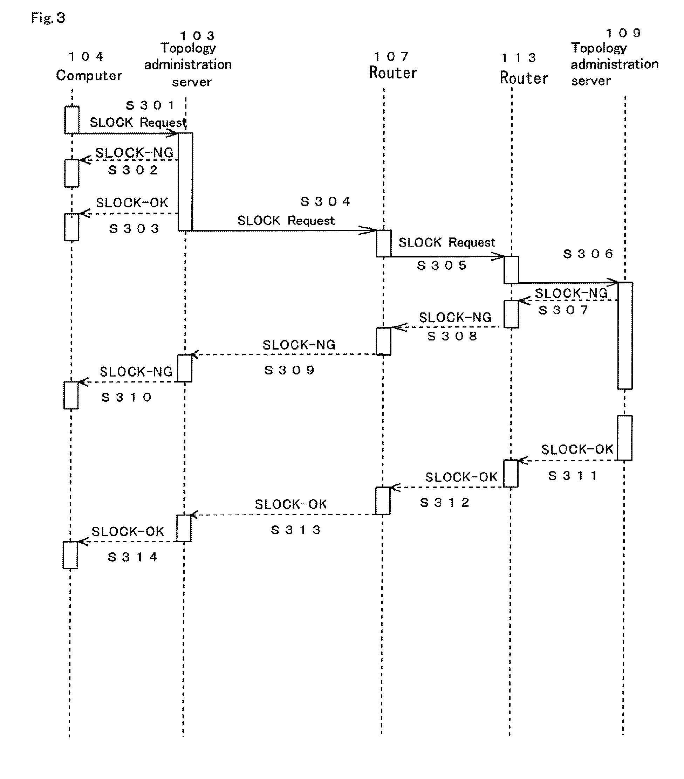

Fig. 3 is a sequential diagram of processing in which the computer performs a lock on the cached database object.

Assuming that in step S301, the computer 104 transmits the SLOCK request to the topology administration server 103.

In case where the lock request corresponds to the database object stored in the database administration apparatus of the same administration domain, and lock is impossible, the topology administration server 103 returns a response indicating that the SLOCK is impossible (step S302). Moreover, in case where the lock request corresponds to the database object stored in the database administration apparatus of the same administration domain, and lock is possible, a response indicating that the SLOCK is impossible is returned (step S303).

In the case where the lock request corresponds to the database object stored in the database administration apparatus of the different administration domain, the topology administration server 103 transmits the lock request to the topology administration server 109 of the different administration domain (steps S304, S305, and S306); and in cases where the lock is impossible, a response indicating that the lock is impossible is returned (steps S307, S308, S309, and S310). Moreover, in cases where the lock is possible, a response indicating that the lock is executed is returned (steps S311, S312, S313, and S314).

As described above, by that the topology administration server administers the cache and the lock information of the database object stored in the database administration apparatus of the administration domain; it becomes possible to add a new computer to the administration domain, and to cache the database object stored in the database administration apparatus of the different administration domain. Moreover, it becomes possible to perform lock to the database object in order to avoid inconsistency.

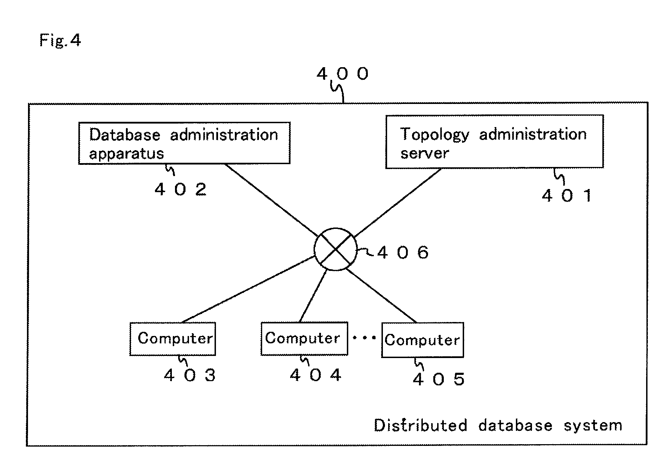

Fig. 4 is a functional block diagram of the distributed database system of the first embodiment of the present invention. The distributed database system 400 of the first embodiment comprises the database administration apparatus 402, the topology administration server 401, and a plurality of computers (403, 404, ..., and 405).

The "database administration apparatus" 402 administers database allocated on the network. Note that the databases allocated on the network may include the database stored in the database administration apparatus 402.

The "topology administration server" 401 is an apparatus, which distributes the data of the database administration apparatus 402, and comprises units as follows.

The "computers" (403, 404,..., 405) are allocated in the administration domain administered on said network by the topology administration server 401, and comprise units as follows. Note that "said network" corresponds to the network, in which the database administered by the database administration apparatus 402 is allocated.

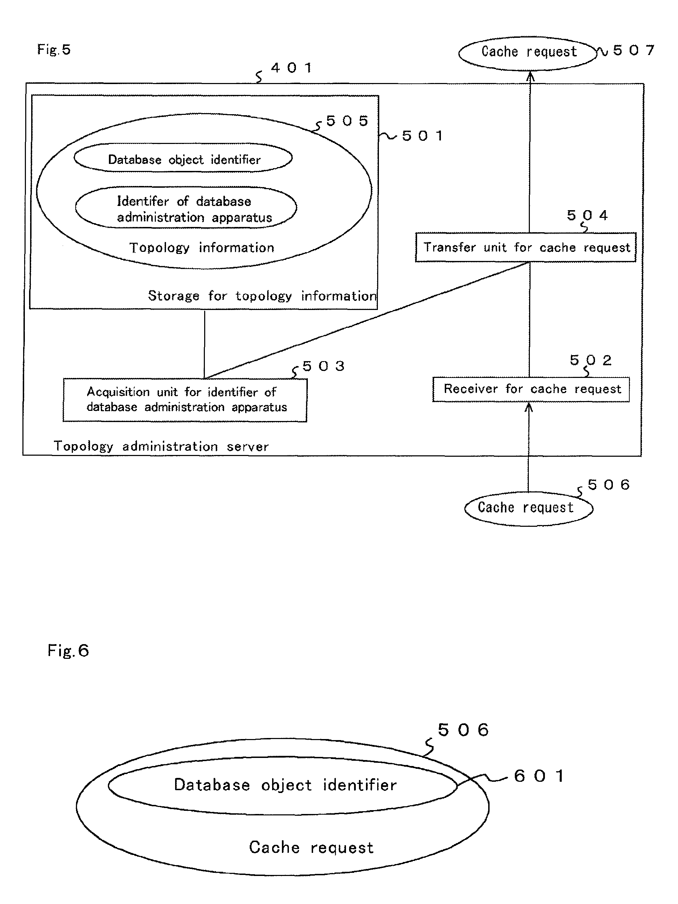

Fig. 5 is a functional block diagram of the topology administration server 401. The topology administration server 401 comprises storage for topology information 501, a receiver for cache request 502, an acquisition unit for an identifier of database administration apparatus 503, and a transferring unit for a cache request 504.

The "storage for topology information" 501 stores the topology information. The "topology information" corresponds to information including information, which correlates the database object identifier and the identifier of database administration apparatus. The "database object identifier" corresponds to information for identifying the database object administered by the database administration apparatus 402. Examples of the database object include: (1) database itself, (2) respective tables, which configure the database, (3) the index attached to the column of the table, (4) respective lines, which configure the table, and (5) respective columns, which configure the line. Therefore, examples of the database object identifier include: the database identifier, the table identifier, the index identifier, the line identifier, and the column identifier. The "identifier of database administration apparatus" corresponds to information for identifying the database administration apparatus, which administers the database object. For example, in cases where the database administration apparatus is identified by name, the name is the identifier of database administration apparatus, or for example, by an IP address, the IP address is the identifier of database administration apparatus.

The topology information includes information, which correlates the database object identifier and the identifier of database administration apparatus. Consequently, the storage for topology information 501 may store the topology information, for example, by a table having a column comprising the database object identifier and the identifier of database administration apparatus. Moreover, in order to acquire an identifier of database administration apparatus from a database object identifier; an index, in which the database object identifier is a key and the identifier of database administration apparatus is a value, may be used.

The "receiver for cache request" receives a cache request. The "cache request" corresponds to information including a database object identifier transmitted from at least one or more computers in order to cache the database object identified by the database object identifier.

Fig. 6 is a diagram of the cache request, which illustrates that the cache request 506 includes the database object identifier 601.

The "acquisition unit for an identifier of database administration apparatus" 503 acquires a corresponding identifier of a database administration apparatus from the storage for topology information 501 based on the database object identifier included in the cache request received by the receiver for a cache request 502. For example, in cases of an index in which the database object identifier is a key and the identifier of database administration apparatus is a value; by using the index, the identifier of database administration apparatus is acquired.

The "transferring unit for cache request" 504 transfers said cache request to the database administration apparatus identified by the identifier of the database administration apparatus, in which the identifier is acquired by the acquisition unit for an identifier of a database administration apparatus 503.

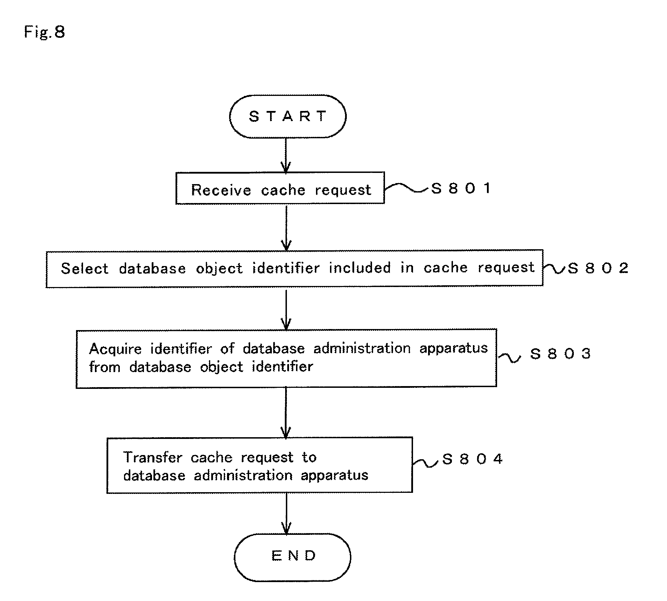

Fig. 8 is a flow chart illustrating processing of the topology administration server 401. In step S801, the receiver for cache request 502 receives the cache request.

In step S802, the database object identifier included in the cache request is selected, and an identifier of a database administration apparatus is acquired by the acquisition unit for identifier of database administration apparatus 503. In step S804, the cache request is transferred by the transferring unit for a cache request 504 to the database administration apparatus identified by the identifier of a database administration apparatus.

Note that the topology administration server may relay the communication between the computer and the database administration apparatus like a router or a firewall in network communication.

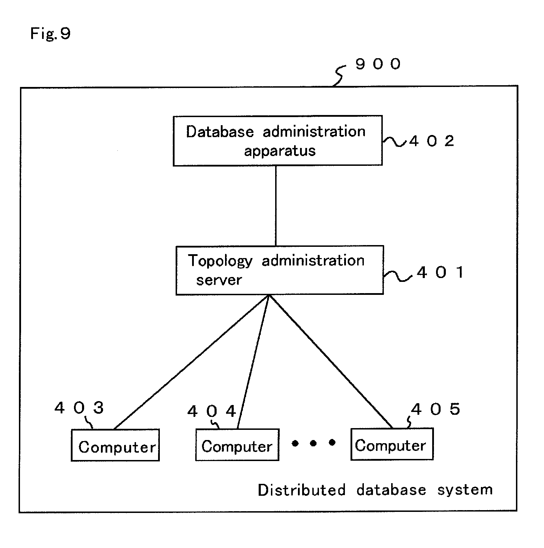

Fig. 9 is a functional block diagram of the distributed database system 900, in which the topology administration server 401 relays a communication between the computer (403, 404, .., and 405) and the database administration apparatus 402.

In the configuration of Fig. 9, the database object, which is transmitted from the database administration apparatus 402 in accordance with the cache request transmitted from the computer, is relayed by the topology administration server 401 and is transmitted to the computer. For this purpose, the topology administration server 401 needs to determine which computers have transmitted which cache requests in relation to certain database objects.

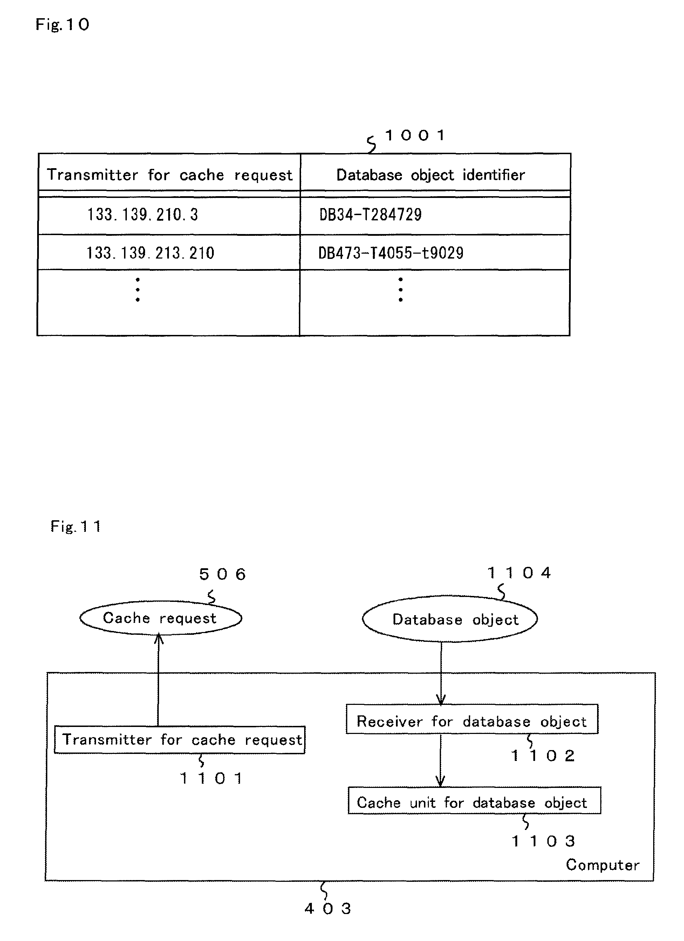

Fig. 10 is a table used to determine which computers have transmitted which cache requests in relation to certain database objects.

In the column of "transmitter for cache request", an identifier for identifying the computer, which has transmitted the cache request, is stored. In Fig. 10, an IP address is used as an identifier. In the column of "database object identifier", the database object identifier included in the cache request transmitted from the computer is stored. When the topology administration server 401 receives the database object transmitted from the database administration apparatus 402, the table 1001 is referred, the identifier of the computer of the transfer of the cache request is acquired from the database object identifier, and the database object is transmitted to the computer identified by the identifier.

Fig. 11 is a functional block diagram of the computer. The computer 403 comprises a transmitter for a cache request 1101, and a receiver for a database object 1102, and a caching unit for a database object 1103.

The "the receiver for database object" 1101 transmits a cache request. As the timing of transmission of a cache request is, for example, the time of instruction by an operator of the computer 403. In this instruction of the operator, a database object identifier for identifying the database object to be cached may be included. Alternatively the database object identifier, which identifies the database object to be cached for the computer 403, may be specified in advance.

The "receiver for database object" 1102 receives the database object, which is returned in accordance with the transmission of the cache request by the transmitter for cache request 1101.

The "caching unit for database object" 1103 caches the database object received by the receiver for database object 1102. This caching is executed by storage for the computer 403, for example, by a memory such as random access memory (RAM), or by a secondary storage such as a magnetic disc.

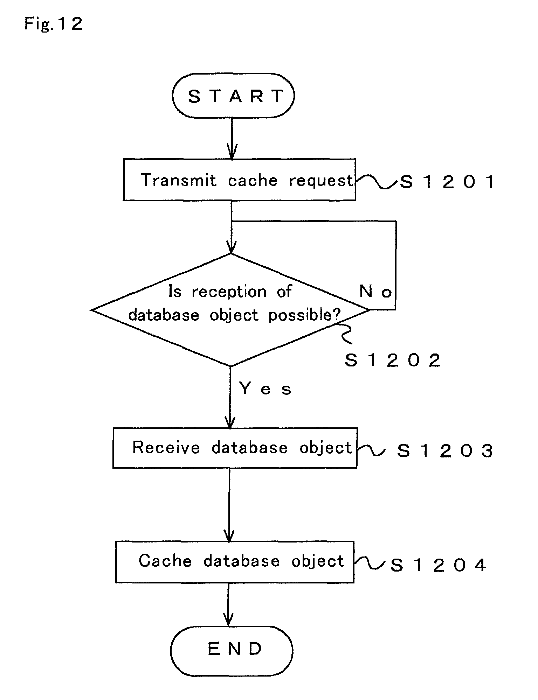

Fig. 12 is a flow chart illustrating processing of the computer 403. In step 1201, the transmitter for cache request 1101 transmits the cache request. In step S1102, the step involves waiting until the reception of database object becomes possible. In step S1203, the receiver for a database object 1102 receives the database object. In step S1204, the caching unit for a database object caches the database object.

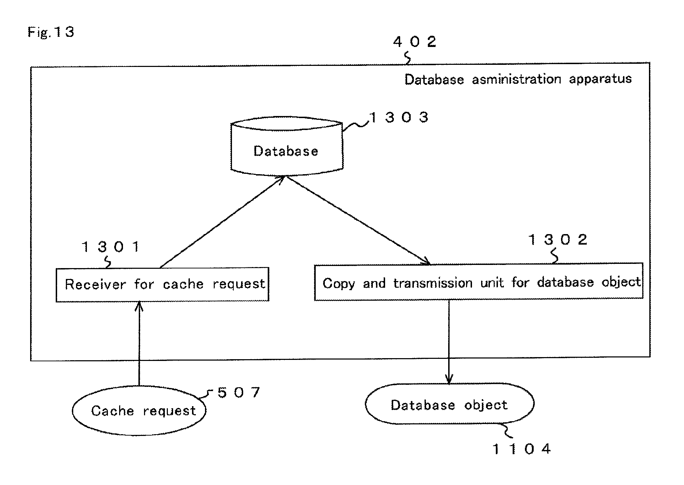

Fig. 13 is a functional block diagram of the database administration apparatus 402. The database administration apparatus 402 comprises a receiver for a cache request 1301, and a copy and transmission unit for a database object 1302.

The "receiver for cache request" 1301 receives the cache request transferred from the topology administration server 401.

The "copy and transmission unit for database object" 1302 copies and transmits the database object in accordance with the cache request received by the receiver for cache request. The cache request includes the database object identifier, so that the database object identified by the database object identifier is acquired from the database 1301, and is copied and transmitted. Note that, although in Fig. 13, the database 1301 exists in the interior of the database administration apparatus 402, may exist in the external to the database administration apparatus 402. For example, the database is stored in a server other than the database administration apparatus 402.

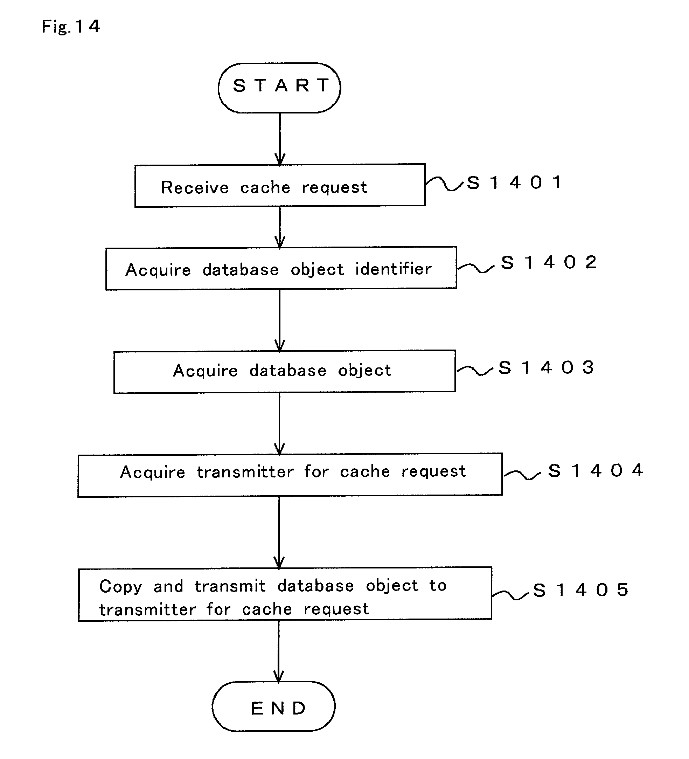

Fig. 14 is a flow chart illustrating the processing of the database administration apparatus 402 from the reception of the cache request to the transmission of the database object. In step S1401, the receiver for cache request 1301 receives a cache request. In step S1402, a database object identifier included in the cache request is acquired. In step S1403, a database object is acquired. In step S1404, a transmitter for the cache request is acquired. In step S1405, the copy and transmission unit for database object 1302 copies and transmits the database object to the transmitter for the cache request.

Note that, although in step S1404, the information of the transmitter is acquired; there are a case that the topology administration server 401 is acquired as the transmitter for the cache request, and a case that the computer, which has transmitted the cache request, is acquired as the transmitter for the cache request. Moreover, without explicit acquisition of the transmitter for the cache request, there is a case that the transmitter for the cache request is acquired automatically in accordance with reception of the cache request. For example, in TCP/IP communication, connection for communication is established, so that an interactive communication path may be established. In such case, by a reception of a cache request, a communication path for transmitting a database object is established, so that the explicit acquisition of the transmitter for the cache request is unnecessary.

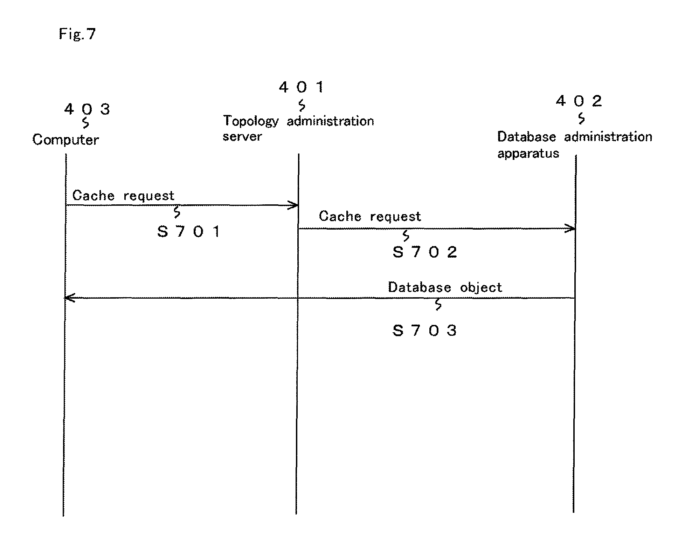

Fig. 7 is a sequential diagram illustrating the data flow among the computer 403, the topology administration server 401, and the database administration apparatus 402.

In step S701, a cache request is transmitted from the computer 403, and is received by the topology administration server 401. In step S702, the topology administration server 401 acquires a database object identifier from the received cache request, acquires an identifier of a database administration apparatus from the database object identifier by the acquisition unit for an identifier of a database administration apparatus 503, and transfers a cache request to the database administration apparatus identified by the identifier of the database administration apparatus. When the database administration apparatus 402 receives the transferred cache request, the database object identifier included in the cache request is acquired and the database object identified by the identifier of the database administration apparatus is transmitted to the computer 403 (step S703). Note that, the database administration apparatus 402 may transmit the database object to the computer 403 directly, or relay to the topology administration server 401.

Note that, the database administration apparatus, the topology administration server, and the computer are implemented by a computer apparatus. In this case, one or more, or all of the computers, which implements the database administration apparatus, the topology administration server, and the computer, may not use a magnetic disk apparatus, which includes a moving mechanism such as a rotational axis. This configuration, in which there is no mechanical factor, improves reliability of the computer apparatus, thereby improving reliability of the entire system. Moreover, without using a magnetic disk, it becomes unnecessary for the operating system operating on the computer apparatus to have a file system, thereby enabling maximum effective use of resource thereof. Furthermore, a uninterruptible power supply, which is able to supply power for some time during power outage, may be connected to the computer apparatus, thereby further improving the reliability thereof.

According to the distributed database system of the first embodiment, if the computer has a function of transmitting the cache request and of caching the returned database object, it becomes possible to participate in the distributed database system, thereby enabling easy distribution of data. Moreover, since a copy of the database object is cached by the computer, even if the interruption occurs in the database administration apparatus, it becomes able to recover by using the cache in the computer. Furthermore, the database object is cached in the computer, thereby enabling multiplexing (mirroring to a plurality of computer apparatuses physically existing in the other place) of the database object. This multiplexing enables continuation of the system without stopping the service of the entire system under a situation that stoppage of the database administration apparatus is required because of check or replacement, etc.

In the second embodiment of the present invention, the distributed database system, in which computation is performed referring to a database object cached in a computer, is provided. Therefore, grid-computing is implemented.

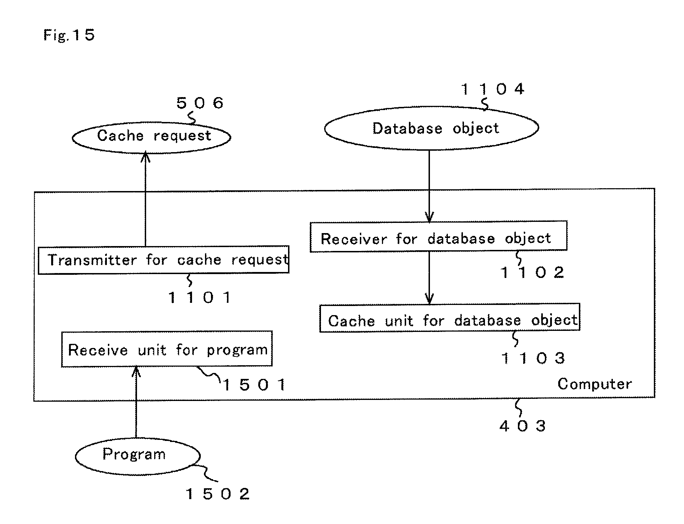

Fig. 15 is a functional block diagram of the computer 403 of the distributed database system of the second embodiment. The computer of the second embodiment is the computer of the first embodiment and further comprises the receiver for the program 1501.

The "receiver for the program" 1501 receives a program for computation referring to a database object cached by the caching unit for database object 1103. The program may be received by using, for example, ftp. Moreover, the external server may transmit or receive a program regularly or irregularly. Note that, the external server may exist within or outside of the distributed database system. Moreover, the program may be stored in the medium such as an optical disk, and may be received by reading the medium.

The program may be any program that performs computation referring to the database object cached in the caching unit for database object 1103. For example, computation using the finite element method may be performed by the database object, which expresses respective methods of the finite element method. Moreover, by writing a result of the computation on the database object, the result of the computation may be transmitted to the program operating on the other computer. Examples of the computation executed by such program include a computation relating to pollutant dispersion and computation for the weather forecast.

According to the distributed database system of the present invention, distributed computation performed referring the database object becomes possible. In specific, a computation updating a database object enables a computation according to a situation, which dynamically changes.

The third embodiment of the present invention provides the distributed database system comprising a computer, which transmits a cache request based on load.

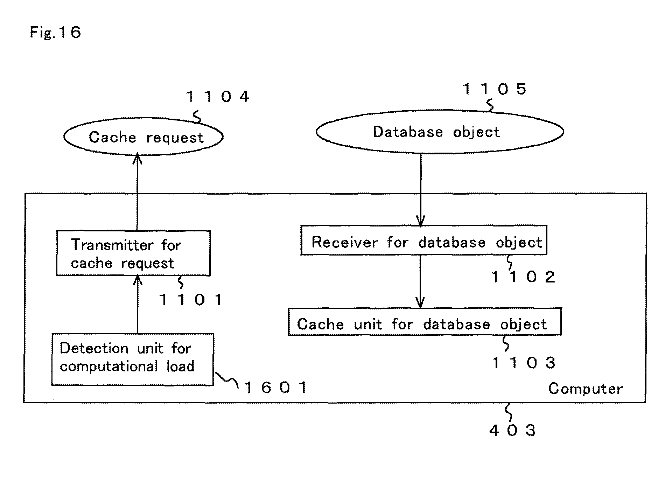

Fig. 16 is a functional block diagram of the distributed database system of the third embodiment. The computer 403 of the third embodiment further comprises a detection unit for computational load.

The "detection unit for computational load" 1601 detects the computational load of computer 403. Moreover, examples of "computational load" include: CPU usage, data occupancy of a magnetic disk, and communication status (e.g. number of discarded packets, number of transmitted or received packets per a predetermined time)

In the third embodiment, the transmitter for cache request 1101 transmits a cache request based on the computational load detected by the detection unit for computational load 1601. For example, in cases where the memory usage (percentage) is below a predetermined value, or in cases where the CPU usage is below a predetermined value; the transmitter for cache request 1101 transmits a cache request.

Moreover, content of the cache request may be changed in accordance with the computational load detected by the detection unit for computational load 1601. For example, if the memory occupancy percentage is low, a cache request including a database object identifier, which identifies the large-sized database object may be transmitted.

According to the third embodiment, the cache request is transmitted based on the computational load, for example, in cases where the computational load is heavy, the cache request is not transmitted, so that it becomes possible to avoid heavy computational load on the computer.

In the fourth embodiment, the distributed database system, which comprises a computer transmitting a cache request upon starting thereof, is provided.

The transmitter for cache request of the computer in the fourth embodiment transmits a cache request in accordance with the starting of the computer of the distributed database system of the first or second embodiment. Here, "computer" may be a computer comprising a transmitter for a cache request, or may be another computer. For example, in the process that the computer starts and boots, the transmitter for cache request is activated and the cache request may be transmitted. Moreover, when the other computer starts, the information thereof is received, the transmitter for cache request is activated, and the cache request may be transmitted.

According to the fourth embodiment, the cache request is transmitted in accordance with the start of the computer, so that it becomes unnecessary to transmit the cache request. This allows transmissions of many computers, thereby enabling data distribution.

In the fifth embodiment, the distributed database system, in which the cache request includes information relating to capacities and data types of database objects cacheable by the computer, will be provided.

The fifth embodiment is a distributed database system according to the first to fourth embodiment, in which the cache request includes information relating to capacities and data types of database objects cacheable by the caching unit for a database object.

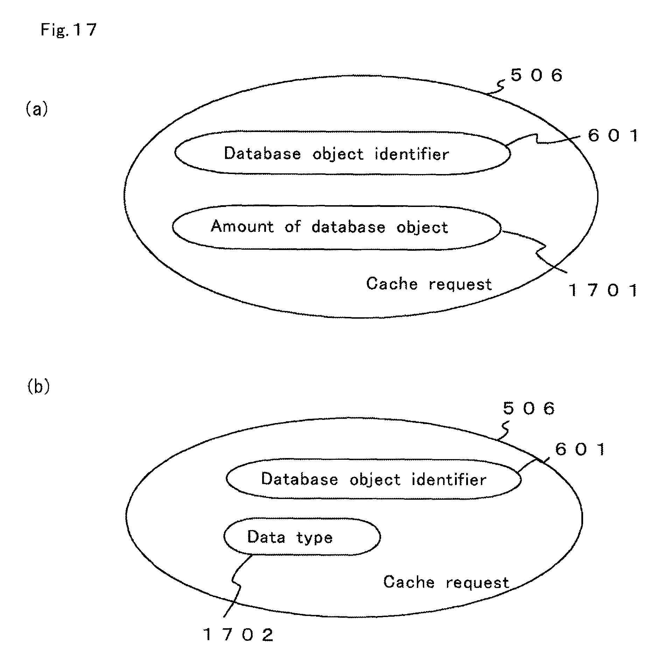

Fig. 17(a) is a diagram illustrating that the cache request includes information 1701 relating to capacities of database objects cacheable by the caching unit for a database object. For example, the cache request includes information indicating how many bytes of database object are cacheable.

Fig. 17(b) is an illustration of a cache request, which includes information 1702 relating to data types of database objects cacheable by the caching unit for a database object. Examples of the data types include database, table, index, line, and column.

In the fifth embodiment, in cases where the database object identifier, which identifies the database object, and the capacity of a database object are included in the cache request; the cache request may be regarded as a cache request with a condition that the caching is requested, in cases where the database is equal or smaller than the capacity of the database object; or may be regarded as a cache request, which requests the table in the database, which is equal or smaller than the capacity of the database object. By causing the database administration apparatus to select the table in the database, which is equal size or smaller than the capacity of the database object, it is possible to avoid caching a specific table.

Similarly, in cases where the database object identifier, which identifies the database, and the data type, which specifies the table, are included in the cache request, the cache request may be regarded as a cache request, which requests the table included in the database identified by the database object identifier.

In the fifth embodiment, the cache request may be changed in accordance with the computational load, or may be transmitted upon starting of the computer. For example, if the memory occupancy percentage is low, a cache request for caching larger size database object may be transmitted.

Moreover, in cases where a program, which performs computation referring to a database object, is executed on the computer, a cache request may be transmitted in accordance with a database object referred by the program. For example, in cases where the columns of the same table are referred to frequently, a cache request, which includes a database object identifier identifying the table including the columns, may be transmitted. Moreover, in cases where the computation referring to many columns is executed, a cache request, which includes a database object identifier identifying the table including the columns, may be transmitted.

Note that, the cache request may include information relating to capacities and data types of database objects. This allows a cache request for a predetermined size database object among a predetermined type database object.

According to the fifth embodiment, it becomes possible to prevent an excessive database object from being cached by the computer. Moreover, it enables cache for effective reference of the database object referred by the computer. Furthermore, it becomes possible to prevent the database object cached by the computer from being cached disproportionately.

In the sixth embodiment, the distributed database system, in which the cache request includes information relating to the time slots during which cache is possible, will be provided.

In the sixth embodiment, the distributed database system according to any one of the first to fourth embodiments, wherein the cache request includes information relating to time slots during which the caching unit for a database object can cache a database object.

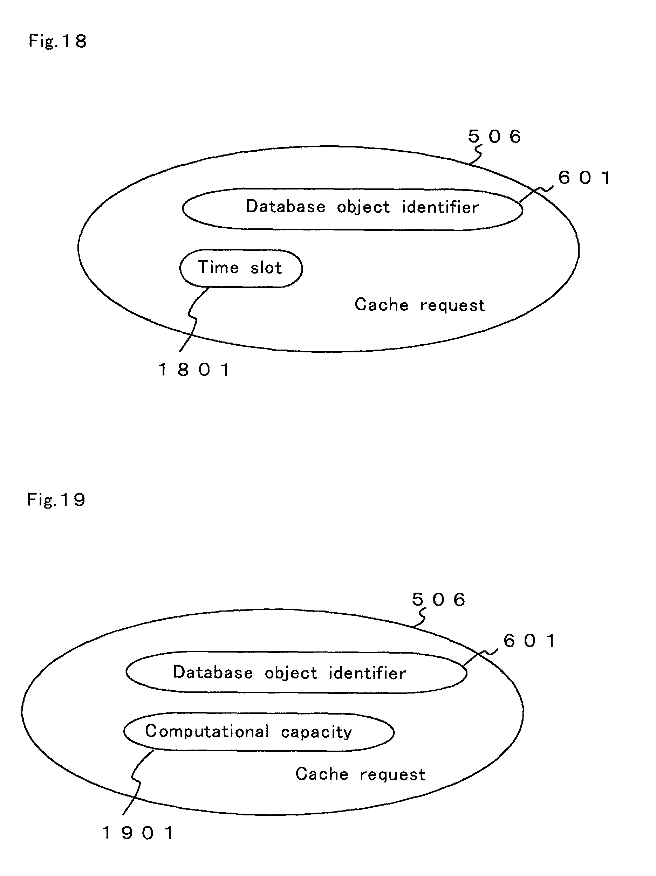

Fig. 18 is a diagram illustrating that the cache request includes information 1801 relating to time slots during which the caching unit for a database object can cache a database object

The information 1801 relating to time slots may indicate the time slots during which the caching unit for a database object can cache a database object, or the time slots during which the caching unit for a database object cannot cache a database object.

The information relating to this time slots may be generated based on an operational schedule of the computer, or may be generated based on the operational history of the computer. For example, if there are many days that the computer is not operated in the daytime, the information relating to the time slot, which indicates that caching is impossible in the daytime, may be generated.

Moreover, information relating to the time slot may be generated from the history of the computational load of the computer. For example, information relating to the time slot, which indicates that if the CPU occupancy is high or there are many communication packets in the evening, caching is impossible in the evening, may be generated.

Furthermore, information relating to time slot, during which cache is possible, may be generated based on the program for computation referring the database object.

According to the sixth embodiment, it becomes possible to transmit the database object to the computer by the database object administration apparatus in the time slot during which the caching unit for a database object can cache a database object, thereby enabling effective utilization of the cache.

In the seventh embodiment, the distributed database system, in which the cache request includes information possessed by the computer, will be provided.

In the seventh embodiment, it is characterized by a distributed database system according to any one of the first to the fourth embodiment, wherein the cache request includes information relating to computational capacity of a computer.

Fig. 19 is a diagram illustrating that a cache request includes information 1901 relating to computational capacity of a computer.

The "information relating to computational capacity of a computer" refers to information indicating processing capacity of computation such as memory capacity of a computer, capacity of a magnetic disk, a model number of CPU, and operating frequency.

According to the seventh embodiment, it becomes possible to cause a computer to cache a database object in accordance with the computational capacity thereof, thereby resulting in effective distribution of data.

In the eighth embodiment, the distributed database system, wherein the cache request includes information relating to consideration for caching a database object, will be provided.

In the eighth embodiment, it is characterized by a distributed database system according to any one of the first to fourth embodiments, wherein the cache request includes information relating to consideration for caching a database object by a computer.

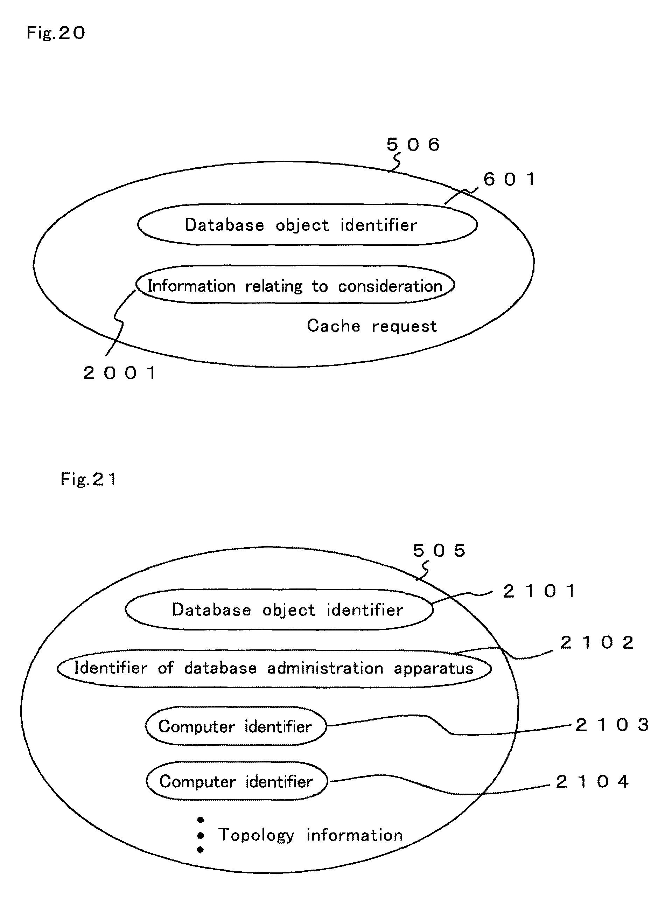

Fig. 20 is a diagram indicating that the cache request includes information 2001 relating to a consideration.

Examples of the "information relating to a consideration" include information indicating how much consideration per database object is to be paid to the administrator of the computer (including an owner, occupant, etc.), and information indicating how much consideration according to the number of bytes of a database object is to be paid to the administrator of the computer.

Meanwhile, the information may indicate how much consideration is to be paid from the administrator of the computer to the administrator of the database object. In this case, in cases where the computer performs computation referring to the database object, the consideration is for the reference of the database object. In this case, information relating to the consideration included in the cache request may indicate the upper-limit of the consideration, which the administrator of the computer can pay.

According to the eighth embodiment, in cases where the administrator of the database administration apparatus causes the computer to cache for backup of the database, it becomes possible to cause a computer to cache at the lowest cost. Moreover, in cases where the computation is performed referring to the database object, and the consideration is paid for the reference, it becomes possible to prevent from increasing the consideration to be paid.

In the ninth embodiment, the distributed database system, which can administrate the computer caching the database object, will be provided.

The distributed database system of the ninth embodiment is the distributed database system according to the first embodiment, in which the topology information further correlates an identifier for a computer, in which a database object is cached, with a database object identifier.

Moreover, in the ninth embodiment, the topology administration server comprises a receiver for cache-completed information and a cache updating unit for topology information.

Fig. 21 is a diagram illustrating the topology information of the ninth embodiment. To the database object identifier 2101, the identifier of database administration apparatus 2102 and the identifier of computer 2103 and 2104 are correlated. The identifiers of computers (2103 and 2104) are the identifiers for identifying the computers, which cache the database objects identified by the database object identifiers. For example, an IP address of a computer is used as an identifier.

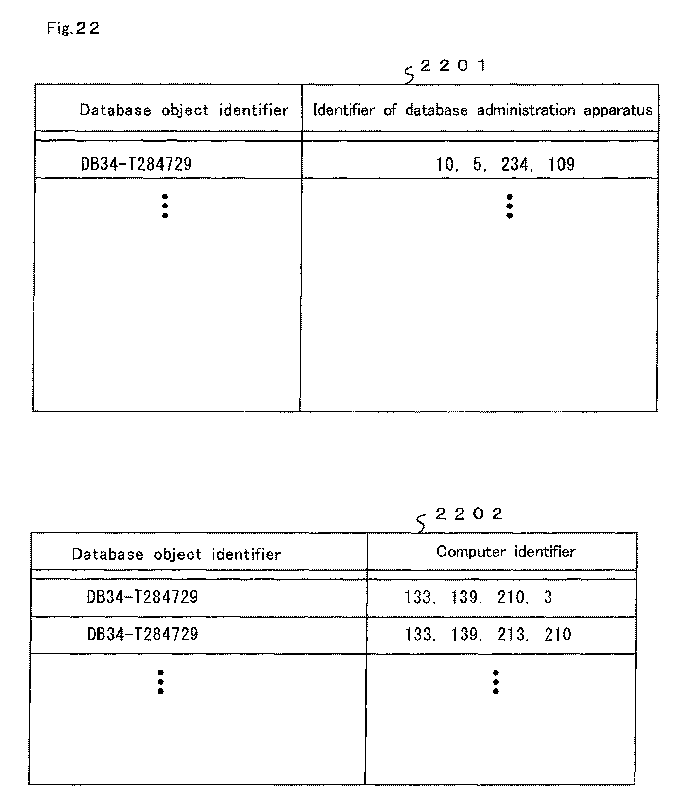

Fig. 22 is a table of the topology information illustrated in the diagram of Fig. 21. The table 2201 is a table which correlates the database object identifier and the identifier of database administration apparatus. Moreover, the table 2202 is a table of the database object identifier and the identifier of computer. By using the two tables, in cases where one database object is cached by a plurality of computers; the database object identifier and the identifier of computer are stored in the table 2202, so that, it becomes possible to avoid storing the database object identifier in the table 2201 redundantly.

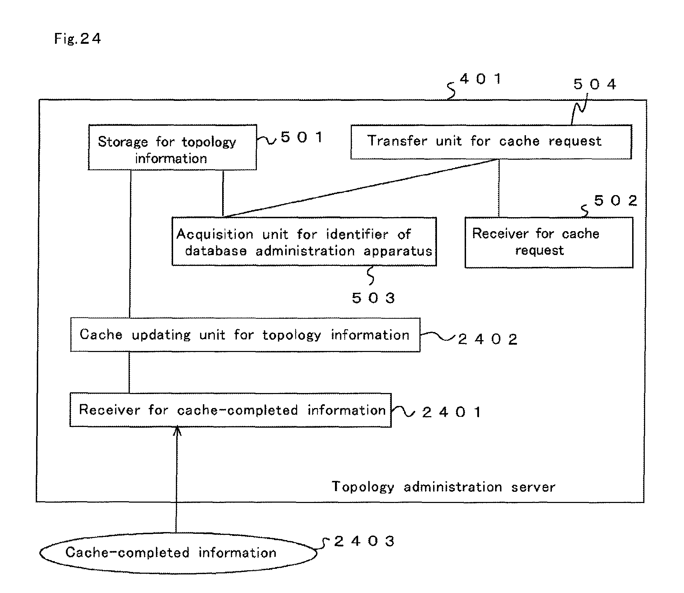

Fig. 24 is a functional block diagram of the topology administration server of the ninth embodiment. The topology administration server of the ninth embodiment is the topology administration server according to the first embodiment further comprising a receiver for cache-completed information 2401 and a cache updating unit for topology information 2402.

The "receiver for cache-completed information" 2401 receives cache-completed information. The "cache-completed information" is information indicating that the database object is cached by the computer. This cache-completed information may be transmitted by the transmitter for cache-completed information when the computer, which comprises a transmitter for cache-completed information, caches the database object. Moreover, the database administration apparatus comprises a transmitter for cache-completed information, and when the transmission of the database object to the computer is completed, the cache-completed information may be transmitted. Furthermore, in cases where the database object is transmitted to the computer via the topology administration server, after the topology administration server transmits the database object to the computer, the cache-completed information may be generated in the topology administration server, and may be received by the receiver for cache-completed information 2401.

The cache-completed information includes at least the identifier for identifying the computer, which has cached the database object. Moreover, the cache-completed information may further include the database object identifier of the cached database object.

The "cache updating unit for topology information" 2402 updates the cache-completed information of the topology information stored by the storage for topology information to the current status based on the cache-completed information received by the receiver for cache-completed information 2401.

For example, in cases where the identifier of the computer and the database object identifier are included in the cache-completed information, the identifier of the computer and the database object identifier are extracted, and a new line is added to the table 2202.

Moreover, as illustrated in Fig. 9, in cases where the communication between the computer and the database administration apparatus is performed via the topology administration server, if the cache-completed information includes only the identifier of the computer, referring to the table 1001 of Fig. 10, the database object identifier may be extracted, and a new line may be added to the table 2202.

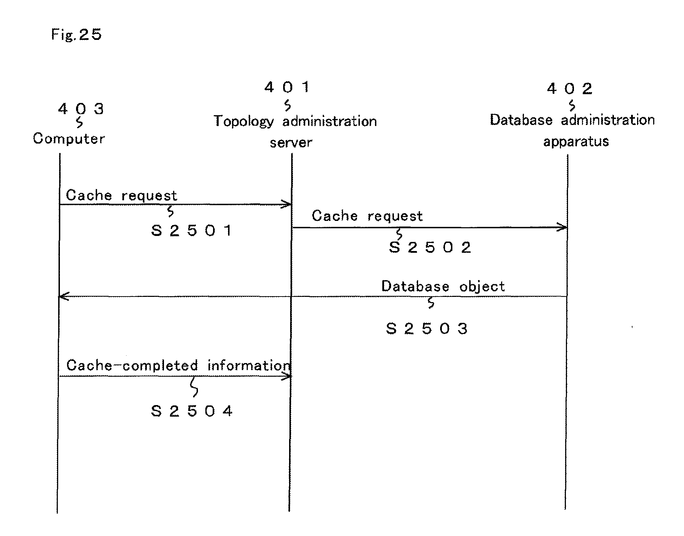

Fig. 25 is a sequential diagram illustrating the data flow in cases where the computer comprises a transmitter for cache-completed information.

In step S2501, the cache request is transmitted from the computer 403 to the topology administration server 401. In step S2502, the cache request is transferred to the database administration apparatus 402 by the topology administration server 401. In step S2503, the database object is transmitted from the database administration apparatus 402 to the computer 403. In step S2504, when the computer 403 caches the database object, the cache-completed information is transmitted to the topology administration server 401.

According to the ninth embodiment, it becomes possible to administer the computer, which caches the database object, by the topology administration server. For example, in cases where a failure occurs in the database administration apparatus, it becomes possible to detect the computer caching the database object, and to acquire the database object from the computer, thereby recovering from the failure. Moreover, in cases where consideration for the cache of the database object is to be paid, it becomes possible to administer the information relating to the payment of the consideration by the topology administration server.

In the tenth embodiment, the distributed database system, which comprises a topology administration server administering the lock information relating to the database object, will be provided.

In the tenth embodiment, it is characterized by a distributed database system according to the ninth embodiment, wherein the topology information correlates lock information with a database object identifier; and the topology administration server comprises a receiver for lock-operation information, and a lock updating unit for topology information.

The "lock information" corresponds to information relating to a lock, which is executed on the database object. The "lock" refers to a prohibition on a predetermined range of operations to the database. For example, in cases where reading is executed on the database object, in order to prevent changing the contents of the database object during the reading operation, a shared lock (SLOCK) is executed. Moreover, the content of the database object is changed; in order to prevent from reading or changing the content of the database object by the others, an exclusive lock (XLOCK) is executed until the change of the contents is completed (therefore, committed).

Moreover, the lock information may not be limited to information of the contents of the lock, and may further include information indicating who executed the lock operation. Moreover, in order to implement an optimistic lock, information relating to time at which the lock operation is executed may be included.

Furthermore, the lock information may include not only information indicating that the lock to the database object is executed, but also information indicating that the lock to the database object is released.

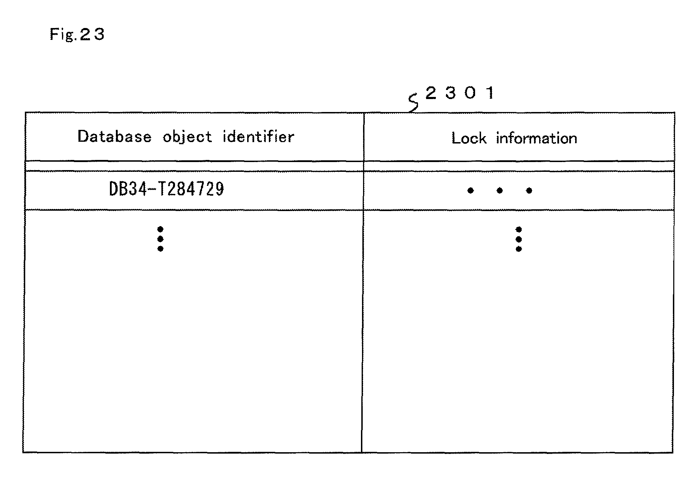

In the tenth embodiment, the lock information is included in the topology information, so that the storage for topology information may administer the topology information by using the table 2201, and 2202 of Fig. 22, and the table 2301 of Fig. 23. The table 2301 is the table correlating the database object identifier and the lock information.

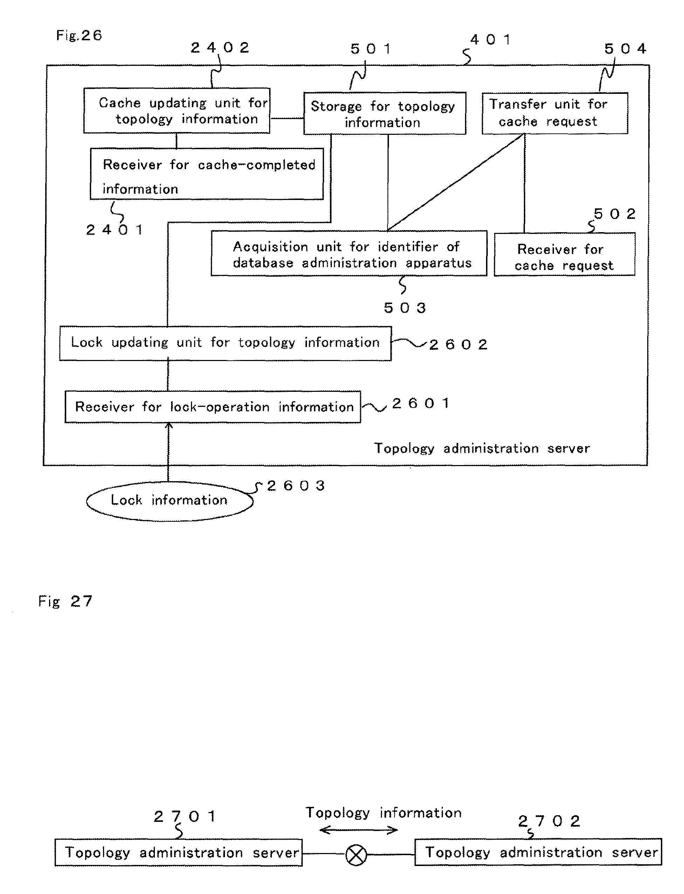

Fig. 26 is a functional block diagram illustrating the topology administration server of the distributed database system of the tenth embodiment. The topology administration server 401 is the topology administration server of the distributed database system according to the ninth embodiment, which further comprises a receiver for lock-operation information 2601, and the lock updating unit for topology information 2602.

The "receiver for lock-operation information" 2601 receives lock information. The lock information may be transmitted, for example, from the database administration apparatus. Moreover, in cases where the database object cached by the computer is referenced or is changed, the computer may transmit the lock information.

The "lock updating unit for topology information" 2602 updates the lock information of the topology information, which is stored by the storage for topology information 501, to the current status based on the lock information received by the receiver for lock-operation information 2601.

For example, when the lock is executed to the database object, a line is added to the table 2301. Note that, in this case, it is checked whether the lock is already executed to the database object. In cases where the lock is already executed, it may be checked whether or not the lock conflicts with the new lock. For example, in cases where XLOCK has been executed to the one database object, if a person other than the person, who has executed the XLOCK, executes SLOCK to the database object, the locks conflict with each other, so that, in this case, the lock information is not updated and error information is returned.

Moreover, in cases where the lock to the database object is released, the line corresponding to the lock to be released is deleted.

According to the tenth embodiment, the lock is administrated by the topology administration server, so that it becomes possible to update the database object without inconsistency.

In the eleventh embodiment, the distributed database system, in which a plurality of the topology administration server exchanges the topology information, will be provided.

Fig. 27 is a schematic diagram of the eleventh embodiment. The distributed database system is the distributed database system according to the ninth or the tenth embodiment, which comprises a plurality of topology administration servers, which can communicate with each other, and exchange the topology information. The exchanges of the topology information correspond to the exchanges of route information by adjacent routers.

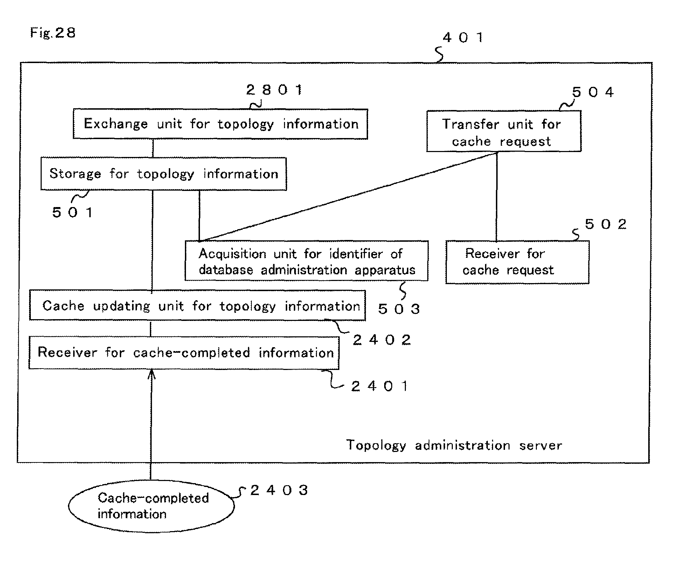

Fig. 28 is a functional block diagram illustrating the topology administration server of the distributed database system of the eleventh embodiment. The distributed database system of the eleventh embodiment is the distributed database system according to the ninth or the tenth embodiment, which comprises the exchanging unit for topology administration information 2901.

The "exchanging unit for topology information" 2801 exchanges the topology information with the other topology administration server. The "the other topology administration server" corresponds to the other topology administration server, which administers the other administration domain, which is communicable via network.

The exchanging unit for topology information 2801 transmits the topology information stored by the storage for topology information 501 regularly or irregularly and receives the topology information, which is transmitted from the other topology administration server regularly or irregularly. Moreover, the exchanging unit for topology information may broadcast information including an identifier, such as the IP address thereof, in order to notify the existence thereof. The broadcasted information may include, for example, information relating to a time interval of transmission of the topology information, and an amount of the stored topology information etc. In cases where the exchanging unit for topology information 2801 receives the topology information from the other topology administration server, the topology information is stored by the storage for topology information 501. In this case, the topology information may be stored with information indicating the topology information of which administration domain.

According to the eleventh embodiment, it becomes possible to cache the database object, which is administered by the database administration apparatus of the administration domain other than the administration domain to which the computer belongs, in cases where there is a plurality of administration domains. This allows a wide range of distribution of data.

The twelfth and thirteenth embodiments relate to the distributed database system according to the second embodiment, in which the updating function of the database object is clarified. In the twelfth embodiment, the database administration apparatus can start updating the database object administered therein, and in the thirteenth embodiment, the database administration apparatus can start updating the database object cached by the computer. In the thirteenth embodiment, an update of the database object cached by the computer is started, for example, in accordance with the execution of the program received by the receiver for program. This allows the program to update the database object.

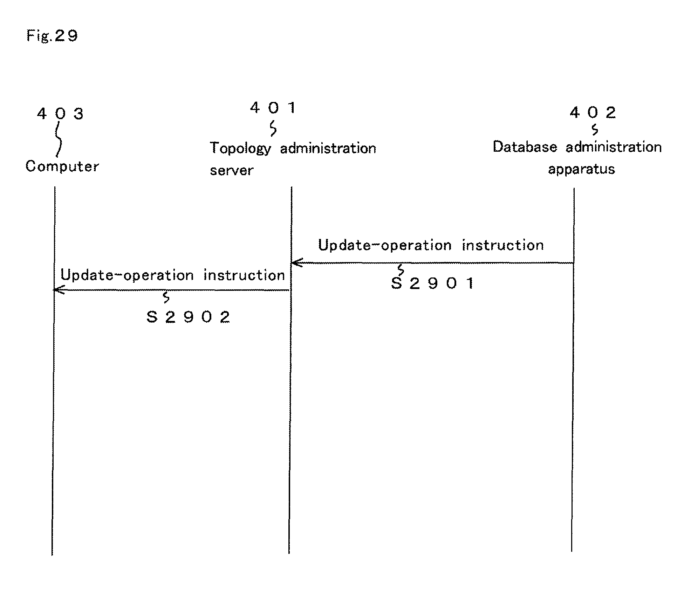

Fig. 29 is a sequential diagram illustrating the data flow of the twelfth embodiment. When the database administration apparatus 402 updates the database object, in step S2901, the update-operation instruction, which is an instruction of update-operation of the database object cached by the computer, is transmitted, and received by the topology administration server 401. In step S2902, the topology administration server 401 transmits the update-operation instruction to the computer. Note that, in cases where the topology information, which is stored by the topology administration server, correlates the identifier of the computer, in which the database object is cached, with the database object identifier, the identifier of the computer, which caches the database object, is specified, and the update-operation instruction may be transmitted to the computer, from which the identifier has been specified.

Note that, the "update-operation" includes change and deletion of the database object. Moreover, if the database object is a database, addition of a table or an index to the database is included. Moreover, if the database object is a table, addition of a line and of a column, and, name of a column etc. are included.

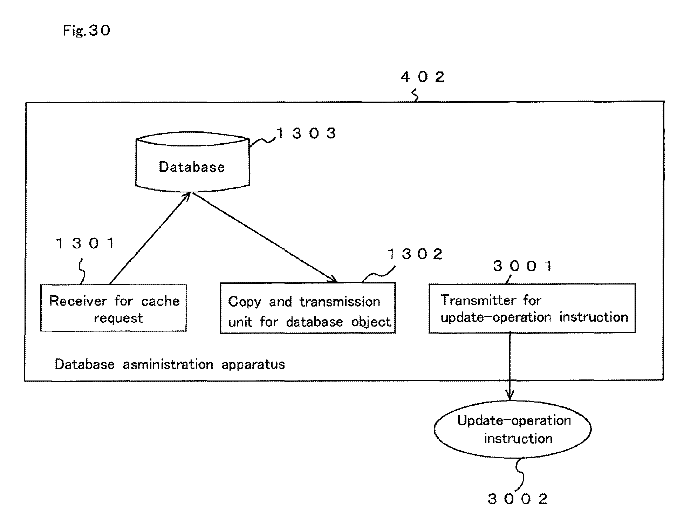

Fig. 30 is a functional block diagram of the database administration apparatus. The database administration apparatus of the twelfth embodiment is the database administration apparatus according to the second, the ninth, or the eleventh embodiment, which comprises the transmitter for update-operation instruction 3001.

The "transmitter for update-operation instruction" 3001 transmits the update-operation instruction, which is an instruction of update-operation to the cached database object, to a client apparatus, which is a computer caching the database object. For example, the update-operation instruction may be transmitted to all of the computers by broadcasting. If the database administration apparatus administers the computer, which caches the database object, the update-operation instruction may be transmitted from the transmitter for an update-operation instruction to the computer directly.

Alternatively, in cases where the distributed database system of the twelfth embodiment is based on the ninth embodiment; the topology information, which is administered by the topology administration server, stores information as to which computer has cached which database object. So that, the transmitter for update-operation instruction 3001 may transmit the update-operation instruction to the topology administration server. The topology administration server specifies the computer, which caches the updated database object, based on the topology information, and transmits the update-operation instruction to the computer.

Alternatively, in cases where the distributed database system of the twelfth embodiment is based on the eleventh embodiment; a plurality of topology administration servers exchanges the topology information. Therefore, even if the computer of the other domain caches the database object, the update-operation instruction can be transmitted to the computer of the other domain.

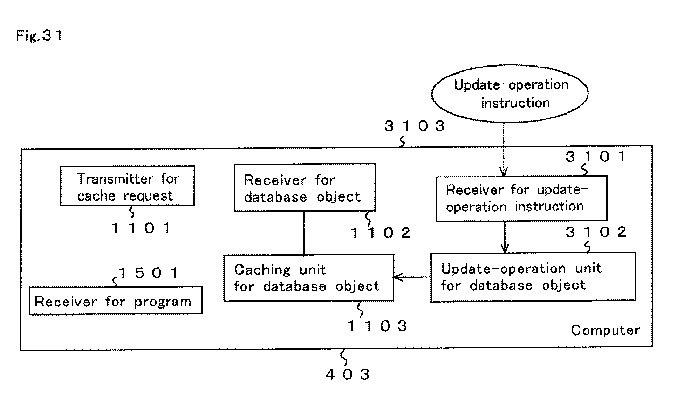

Fig. 31 is a functional block diagram of the computer. The computer of the twelfth embodiment is the computer according to the second, the ninth, or the eleventh embodiment, which comprises a receiver for an update-operation instruction 3101 and an update-operation unit for a database object 3102.

The "receiver for an update-operation instruction" 3101 receives the update-operation instruction.

The "update-operation unit for a database object" 3102 updates the database object cached by the caching unit for a database object 1103 based on the update-operation instruction received by the receiver for an update-operation instruction 3101.

For example, if the update-operation instruction is an instruction, which instructs to delete the database object, the database object is deleted.

Moreover, when the database object is updated based on the update-operation instruction, it is checked whether or not the database object to be an object of the update-operation instruction is cached by the caching unit for database object 1103, and only when the database object is cached, the update-operation may be executed.

According to the twelfth embodiment, the update-operation to the database object by the database administration apparatus is reflected on the database object cached by the computer. This allows the program operated on the computer to execute computation referring the database object of the current status.

Moreover, in cases the twelfth embodiment is based on the eleventh embodiment; the update-operation instruction may be transmitted to the computer of the other domain, and a check for consistency and a check for exclusive control become unnecessary, thereby preventing occurrence of delay.

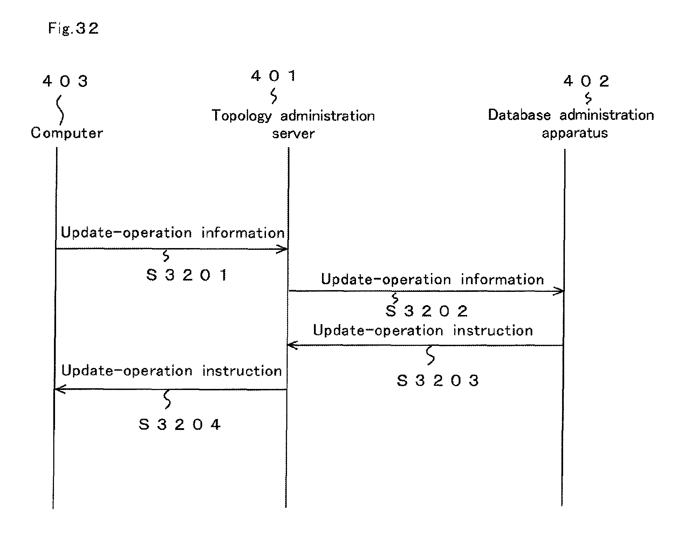

Fig. 32 is a sequential diagram illustrating the data flow of the distributed database system of the thirteenth embodiment.

When, in the computer 403, the database object cached therein is updated, in step S3201, the update-operation information is transmitted to the topology administration server 401. The topology administration server 401 refers to the topology information, specifies the database administration apparatus, which administers the database object to be updated, and transfers the update-operation information to the database administration apparatus (step S3202). When, in the database administration apparatus, the database object is updated based on the update-operation information, as described in the twelfth embodiment, the update-operation instruction of the database object is transmitted to the topology administration server 401 (step S3203), is transferred to the computer 403 (step S3204), and the database object is updated in the computer 403.

Note that, when the database administration apparatus 402 receives the update-operation information, a check for consistency and a check for exclusive control are executed. In cases where there is inconsistency or conflict in the exclusive control, the update may not be executed. In such case that the database administration apparatus 402 does not execute the update, information indicating error may be transmitted to the computer 403, which has transmitted the update-operation information.

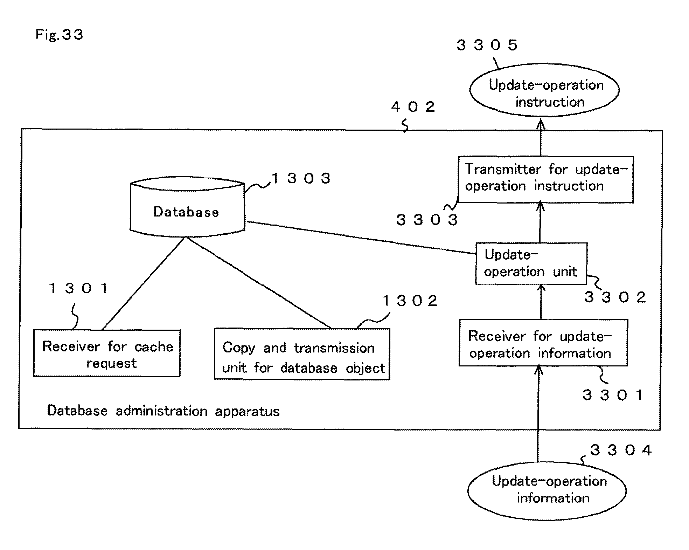

Fig. 33 is a functional block diagram of the database administration apparatus of the thirteenth embodiment. The database administration apparatus of the thirteenth embodiment is the database administration apparatus according to the second, the ninth, or the eleventh embodiment, which further comprises a receiver for update-operation information 3301, an update-operation unit 3302, and a transmitter for update-operation instruction 3303.

The "receiver for update-operation information" 3301 receives update-operation information. The "update-operation information" corresponds to the update-operation to the database object. For example, it is information indicating what update-operation is executed to which database object, or what update-operation is to be executed.

The "update-operation unit" 3302 executes the update-operation to the database object, which is stored therein (corresponds to the database object stored by the database administration apparatus 402), based on the update-operation information received by the receiver for update-operation information 3301.

The "transmitter for update-operation instruction" 3303 transmits the update-operation instruction, which is an instruction of update-operation to the cached database object, to a client apparatus, which is a computer caching the database object, based on the update-operation information. For example, the update-operation instruction may be transmitted to all of the computers by broadcasting. If the database administration apparatus administers the computer, which caches the database object, the update-operation instruction may be transmitted from the transmitter for update-operation instruction to the computer directly.

The update-operation instruction may be transmitted from the database administration apparatus to the computer directly, or may be transmitted to the topology administration server. In cases where, in the topology information administered by the topology administration server, the topology administration server correlates the identifier of the computer, to which has cached the database object, to the database object identifier; the topology administration server, which has received the update-operation instruction, specifies the identifier of the computer, which has cached the database object to be updated by referring the topology information, and transmits the update-operation instruction to the computer, which has the specified identifier.

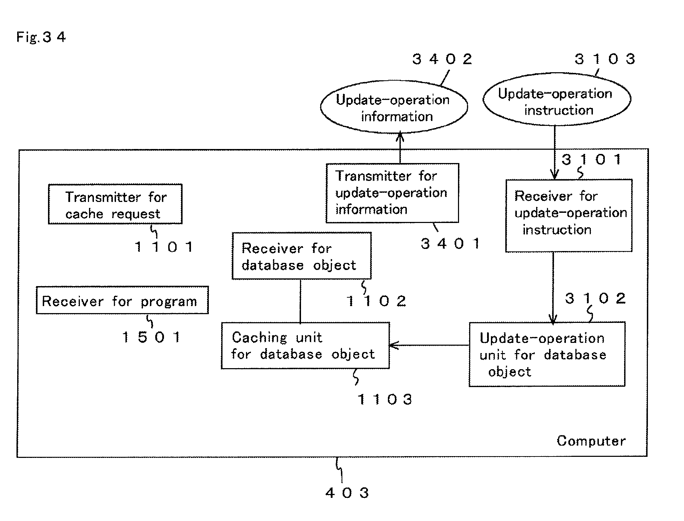

Fig. 34 is a functional block diagram of the computer of the thirteenth embodiment. The computer of the thirteenth embodiment is the computer according to the twelfth embodiment, which further comprises a transmitter for update-operation information 3401.

The "transmitter for update-operation information" 3401 transmits the update-operation information. The above timing of the transmission is the timing that the update-operation to the database object cached by the computer 403 is executed. At this timing, the transmitter for update-operation information 3401 detects what update-operation is executed to which database object, and generates and transmits the update-operation information. Note that, in practice, the cached database object is updated, when the update-operation instruction is received by the receiver for update-operation instruction 3101, and the update-operation is executed by the update-operation unit for database object 3102.

The update-operation information may be transmitted to the database administration apparatus directly, or may be once transmitted to the topology administration server. The topology administration server refers to the topology information, and transmits the update-operation information to the database administration apparatus, which administers the database object to be updated. Moreover, in cases where the topology administration server exchanges the topology information with the other topology administration server, if the database object is the database object related to the update-operation information is the database object administrated by the database administration apparatus of the other domain, the update-operation information is transferred to the database administration apparatus of the other domain.

According to the thirteenth embodiment, the update-operation to the database object in the computer as a client apparatus is reflected on the database object administered by the database administration apparatus, or the database object cached by the other computer. This makes it possible, for example, to transmit the result of the program operated on the computer to the program operated on another computer.

Moreover, in the thirteenth embodiment, it is possible to update the database object, which is cached by the computer. The contents of the update can be transmitted, only when the update by the database administration apparatus is completed normally, only to the computer which caches the database object. This allows, as in case of utilizing the conventional replication technology, to avoid an inconvenience that cached data is unable to be changed, or an inconvenience that the cached data is unable to be changed, so that it becomes impossible to narrow an object of synchronization, thereby causing delay.

In the fourteenth embodiment, the distributed database system, in which backup is executed without stopping the database, and in case of failure, a recovery is possible. For this purpose, the update journal generated by the database administration apparatus is transmitted to the physically different server connected to network.

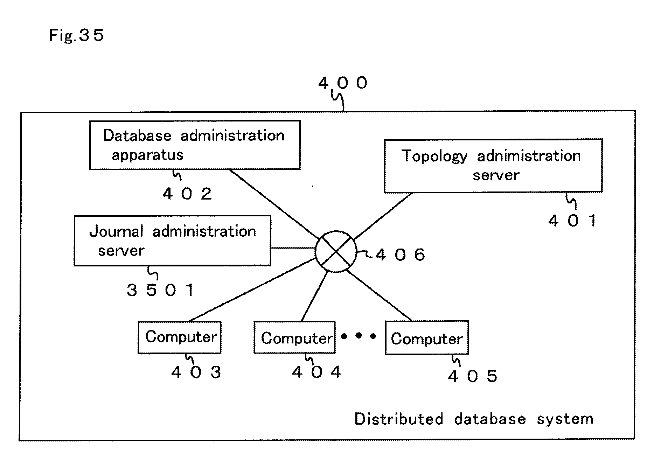

Fig. 35 is a functional block diagram of the distributed database system of the fourteenth embodiment. The distributed database system is the distributed database system according to the first embodiment, which comprises a journal administration server 3501.

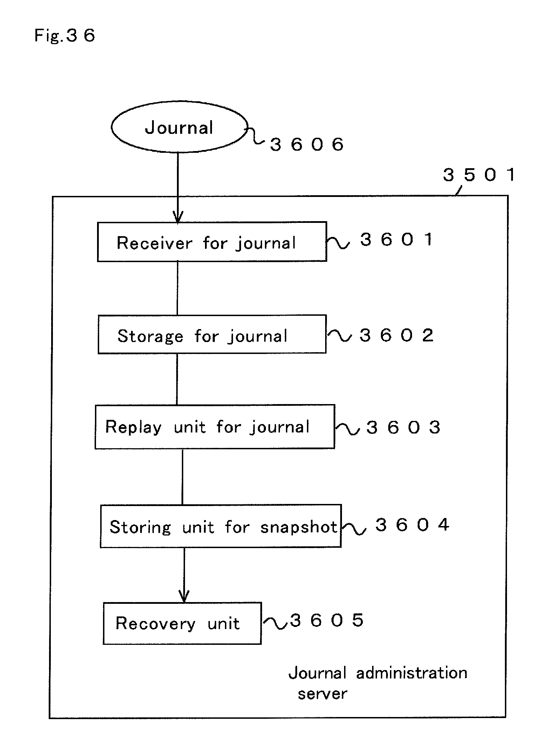

Fig. 36 is a functional block diagram of the journal administration server 3501. The journal administration server 3501 comprises a receiver for journal 3601, storage for journal 3602, a replay unit for journal 3603, a storing unit for snapshot 3604, and a recovery unit 3605.

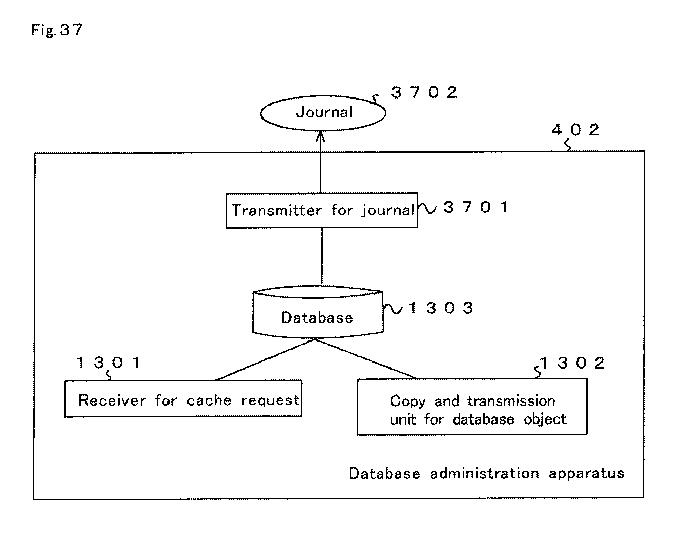

Fig. 37 is a functional block diagram of the distributed database system of the fourteenth embodiment, the distributed database system according to the first embodiment, which comprises a transmitter for journal 3701.

The "receiver for a journal" 3601 receives a journal. The "journal" corresponds to information indicating an update to the database object administered by the database administration apparatus. Therefore, the information is information indicating what update-operation is executed to the database object in the database administration apparatus. The journal may be generated with respect to each update-operation, or may be generated with respect to each one or more update-operations, at the timing that a transaction is committed, etc.

The "storage for a journal" 3602 stores the journal received by the receiver for journal 3601, for example, into memory, magnetic disk, or optical disk, etc. Alternatively, if the power supply is reliable, the journal may be stored in main memory.

The "replay unit for a journal" 3603 replays the journal stored by the storage for a journal 3602. The "replay" means that the update-operation to the database object indicated by the journal is executed by the journal administration server 3501. The replay of the journal is executed to the snapshot stored by the storing unit for snapshot 3604.

This replay may be executed with respect to each storage for the journal by the storage for a journal 3602. Alternatively, the replay may be executed when more than a predetermined amount of the journal is stored by the journal by the storage for journal 3602. Alternatively, the replay may be executed at each predetermined time.

The "storing unit for a snapshot" 3604 stores the snapshot generated based on the journal replayed by the replay unit for a journal 3603.

By replaying the journal, the database administrated by the database administration apparatus is reproduced by the journal administration server. The "snapshot" corresponds to a copy at one point of the database reproduced in such manner. Such copy is memorized and stored, for example, by a memory, a magnetic disk, an optical disk etc. Moreover, the replayed journal may be deleted from the storage for journal 3602 with respect to each storage for the snapshot.

Moreover, a plurality of snapshots may be stored. For example, more than two snapshots such as (1) a snapshot before a specific journal is replayed, (2) a snapshot after a specific journal is replayed etc. are may be stored.

The "recovery unit" 3605 has a function for executing processes for recovery of a domain in failure from said snapshot upon suffering a domain failure. An example of "suffering a domain failure" includes a failure of the database administration apparatus of the distributed database system. The "domain in failure" corresponds to a domain suffering from failure. The "processes for recovery" corresponds to processes for recovery from the failure. For example, the snapshot stored in the storing unit for snapshot is transmitted to the database administration apparatus, and the journal, which has been stored by the storage for a journal after the snapshot has been stored by the storing unit for snapshot, is replayed by the database administration apparatus. Alternatively, with regard to the snapshot stored in the storing unit for a snapshot, the snapshot, which is acquired by replaying the journal, which has been stored by the storage for a journal after the snapshot has been stored by the storing unit for a snapshot, is transmitted to the database administration apparatus. Alternatively, a new database administration apparatus is prepared, and the snapshot may be transmitted to the database administration apparatus.

The "transmitter for a journal" 3701 transmits the journal. Therefore, information indicating what update-operation is executed to the database object in the database object administration apparatus 402 is transmitted. This transmission may be executed with respect to each execution of update-operation to the database object. Alternatively, the transmission may be executed with respect to each occurrence of a predetermined event such as commitment of transaction.

In the present invention, the database object is cached in the computer, so that it is difficult to stop the database, according to the fourteenth embodiment, it becomes possible to backup the database without stopping the database. Moreover, the recovery from failure is executed by moving the snapshot, thereby finishing the recovery in a short time.

Furthermore, it becomes possible to deal with data loss on the main memory caused by failure of hardware such as the database administration apparatus etc. or restart for hang-up of software etc. The recovery is completed in a limited domain, so that a recovery of massive database is completed in the distributed object, thereby reducing operational burden.

Hereinafter, the example of the present invention will be described.

The work stations or personal computers, which are allocated in the company, are connected to LAN. The personal computers on the employees' desks are used during working hours, however, not used during the night time and holiday. Although these personal computers are high-performance, software working thereon are word processor, spreadsheet, presentation processing tool, mailer, browser, etc., which don't require so much computational resource, thereby producing capacity surpluses of CPU, main memory, and magnetic disk thereof.

Meanwhile, since monthly processing of payment requesting and receiving concentrates at the month-end, in order to use the capacity surpluses of the personal computers, these computers are used as computers of the distributed database system of the present invention. In this case, a computer, of which computational load is below a predetermined level, is caused to cache the database object for the processing of payment requesting and receiving, and to operate the program for processing of payment requesting and receiving referring the database object. Accordingly, it becomes possible to execute processing of payment requesting and receiving without support of work station, etc.

Moreover, another example of the present invention will be described, hereinafter.

Assuming that a company, which provides the broadband internet service to a multi-dwelling such as an apartment house, decides not to collect the service usage fee, in order to make all the apartments of the multi-dwelling use the service. Instead, they offer the condition that high-performance personal computers with low-power consumption are provided to all the houses, and are always on. Of course, always-on connection to the broadband internet as a condition is also required.

Assuming that the provided high-performance personal computer with low-power consumption is the computer of the distributed database system of the present invention. This high-performance personal computer may be a computer, which does not include a magnetic disk apparatus, which includes a moving mechanism such as a rotational axis, thereby reducing occurrence of mechanical failure. Moreover the computer may be connected to a uninterruptible power supply preparing for power outage. A company, which provides the broadband internet service, makes a contract with a company, which needs computer resources, and provides the surplus computer resources of the high-performance personal computer with low-power consumption provided to all the apartments collectively. The usage fee of this surplus computer resource is collected by the company providing the broadband internet service from the company having the contract. Moreover, by operating software of the groupware using the database object on the personal computer of the each apartment, the groupware environment in the apartment house and a regional information network are implemented.

By exchanging the topology information among the topology administration servers, of which domains are the apartment house, the regional information network develops and increases the value thereof as a market resource.

As described above, according to the distributed database system of the present invention, it becomes possible to distribute the database object to a plurality of computers. Moreover, it becomes possible to execute distributed computation with effective utilization of CPU resources and memory resources. Furthermore, it becomes possible to backup the database without stopping the database. Therefore, the present invention is effective as a distributed database system.

## Claims

1. A distributed database system comprising:
a database administration apparatus, which administers a database allocated on network,
a topology administration server for distributing database of said database administration apparatus, and
a plurality of computers, which are allocated in an administration domain administered on network by said topology administration server; wherein
said topology administration server comprises:
storage for topology information, which stores topology information, including certain information correlating a database object identifier, which is information for identifying a database object administered by said database administration apparatus, with an identifier of a database administration apparatus for identifying a database administration apparatus administering the database object;
a receiver for a cache request, which receives a cache request including said database object identifier transmitted from at least one or more of said computers for caching a database object identified by said database object identifiers;
an acquisition unit for an identifier of a database administration apparatus, which acquires a corresponding identifier of a database administration apparatus from said storage for topology information based on the database object identifier included in the cache request received by said receiver for a cache request;
a transferring unit for a cache request, which transfers said cache request to the database administration apparatus identified by the identifier of the database administration apparatus, in which said identifier is acquired by said acquisition unit for an identifier of a database administration apparatus;
said computer comprises:
a transmitter for a cache request, which transfers a cache request,
a receiver for a database object, which receives the database object returned in accordance with the transmission of the cache request by said transmitter for a cache request; and
a caching unit for a database object, which caches a database object received by the receiver for a database object; and
said database administration apparatus comprises:
a receiver for a cache request, which receives the cache request transferred by the topology administration server, and
a copy and transmission unit for a database object, which copies and transmits the database object in accordance with the cache request received by the receiver for a cache request.

2. The distributed database system according to Claim 1, wherein said computer comprises a program receiver, which receives a program for performing computation while referring to a database object cached in the caching unit for a database object.

3. The distributed database system according to Claim 1 or 2, wherein said computer comprises a detection unit for computational load, which detects the computational load thereof; and a transmitter for a cache request, which transmits a cache request based on the computational load detected by the detection unit for computational load.

4. The distributed database system according to Claim 1 or 2, wherein the transmitter for a cache request transmits a cache request upon starting a computer.

5. The distributed database system according to any one of Claim 1 to 4, wherein the cache request includes information relating to capacities and data types of database objects cacheable by the caching unit for a database object.

6. The distributed database system according to any one of Claim 1 to 4, wherein the cache request includes information relating to time slots during which the caching unit for a database object can cache a database object.

7. The distributed database system according to any one of Claim 1 to 4, wherein the cache request includes information relating to computational capacity of a computer.

8. The distributed database system according to any one of Claim 1 to 4, wherein the cache request includes information relating to consideration for caching a database object by a computer.

9. The distributed database system according to Claim 1, wherein
the topology information further correlates an identifier for a computer, in which a database object is cached, with a database object identifier; and
said topology administration server comprises:
a receiver for cache-completed information, which receives cache-completed information, which is information indicating caching of the database object to the computer,
a cache updating unit for topology information, which updates the cache-completed information of topology information stored in the storage for topology information to the current status based on the cache-completed information received by the receiver for cache-completed information.

10. The distributed database system according to Claim 9, wherein
said topology information correlates lock information relating to a lock, which is operated by a database object, with a database object identifier; and
said topology administration server comprises:
a receiver for lock-operation information, which receives the lock information,
a lock updating unit for topology information, which updates lock information of topology information, which is stored in the storage for topology information, to the current status based on the lock information received by the receiver for lock-operation information.

11. The distributed database system according to Claim 9 or 10,
having a plurality of said topology administration servers, wherein said topology administration server comprises:
an exchanging unit for topology information, which exchanges topology information with the other topology administration server administrating the other administration domain communicable via network.

12. The distributed database system according to any one of Claim 2, 9 or 11, wherein said database administration apparatus comprises:
a transmitter for an update-operation instruction, which transmits an update-operation instruction, which is an instruction for update-operation of a database object, to a client apparatus of a computer caching the database object upon executing the update-operation with respect to the database object held therein; and
said computer comprises:
a receiver for an update-operation instruction, which receives an update-operation instruction, and
an update-operation unit for a database object, which updates the database object cached in the caching unit for a database object based on the update-operation instruction received by the receiver for an update-operation instruction.

13. The distributed database system according to any one of Claim 2, 9 or 11, wherein said database administration apparatus comprises:
a receiver for update-operation information, which receives update-operation information relating to the update-operation on a database object,
an update-operation unit, which executes the update-operation on the database object held therein based on the update-operation information received by the receiver for update-operation information, and
a transmitter for an update-operation instruction, which transmits an update-operation instruction of a cached database object to a client apparatus of a computer caching the database object based on said update-operation information; and
said computer comprises:
a transmitter for update-operation information, which transmits update-operation information,
a receiver for an update-operation instruction, which transmits an update-operation instruction, and
an update-operation unit for a database object, which updates the database object cached by the caching unit for a database object based on the update-operation instruction received by the receiver for an update-operation instruction.

14. The distributed database system according to Claim 1, which further comprises:
a journal administration server comprising:
a receiver for a journal, which receives a journal indicating an update on a database object administered by said database administration apparatus,
storage for a journal, which stores a journal received by the receiver for a journal,
a replay unit for a journal, which replays the journal stored by the storage for a journal,
a storing unit for a snapshot, which stores a snapshot generated based on the journal replayed by said replay unit for a journal, and
a recovery unit having a function for executing processes for recovery of a domain in failure from said snapshot upon suffering a domain failure; and
said database administration apparatus comprises:
a transmitter for a journal, which transmits the journal.
